# EUROPEAN PATENT SPECIFICATION

(11) **EP 4 131 073 B1**
(45) Date of publication and mention of the grant of the patent: **12.11.2025**
(21) Application number: 22196720.1
(22) Date of filing: 28.05.2020
(51) Int. Cl.: G06K 19/077, H01Q 1/22

(54) **RADIO FREQUENCY IDENTIFICATION (RFID) TAGS FOR METALLIC AND THREE-DIMENSIONAL (3D) OBJECTS AND METHODS OF MAKING AND USING THEREOF**
RADIOFREQUENZIDENTIFIKATIONS (RFID)-ETIKETTEN FÜR METALLISCHE UND DREIDIMENSIONALE (3D) OBJEKTE UND VERFAHREN ZU DEREN HERSTELLUNG UND VERWENDUNG
ÉTIQUETTES D'IDENTIFICATION RADIOFRÉQUENCE (RFID) D'OBJETS MÉTALLIQUES ET TRIDIMENSIONNELS (3D) AINSI QUE LEURS PROCÉDÉS DE FABRICATION ET MÉTHODES D'UTILISATION

(30) Priority: 29.05.2019 US 201962854126 P; 28.12.2019 US 201962954482 P
(43) Date of publication of application: 08.02.2023
(62) Divisional of application: 20733157.0
(73) Proprietor: Avery Dennison Retail Information Services LLC, Mentor, OH 44060 (US)
(72) Inventor: FORSTER, Ian, 44060 Ohio (US)
(74) Representative: HGF

(56) References cited:
- WO-A1-2015/177490
- US-A1- 2005 093 678
- US-A1- 2010 051 703

## Description

### FIELD

The present invention relates generally to the production of a reactive radio frequency identification (RFID) strap which interacts with a metallic object and induces current flow in it. For metallic objects, the reactive RFID strap can be secured to a plastic clip for relatively easy attachment to the metallic object; and if the size and shape of the metallic object are suitable, the reactive RFID strap can induce a far field RFID antenna response.

### BACKGROUND

Generally stated, radio-frequency identification is the use of electromagnetic energy to stimulate a responsive device (known as an RFID "tag" or transponder) to identify itself and, in some cases, provide additional information and/or data stored in the tag. RFID tags typically comprise a semiconductor device commonly referred to as the "chip", upon which are formed a memory and an operating circuitry, which is connected to an antenna. Typically, RFID tags act as transponders, providing information stored in the chip memory in response to a radio frequency interrogation signal received from a reader, also referred to as an interrogator. In the case of passive RFID devices, the energy of the interrogation signal also provides the necessary energy to operate the RFID tag device.

As referenced above, RFID tags are generally formed by connecting an RFID chip to some form of antenna. Antenna types are very diverse, as are the methods of constructing the same. One particularly advantageous method of making RFID tags is to use a strap, a small device with an RFID chip connected to two or more conductors that can be coupled to an antenna. The coupling of the conductors to the antenna can be achieved using a conductive connection, an electric field connection, magnetic connection or a combination of coupling methods.

RFID tags may be incorporated into or attached to articles that a user wishes to later identify and/or track. In some cases, the tag may be attached to the outside of the article with a clip, adhesive, tape, or other means and, in other cases, the RFID tag may be inserted within the article, such as being included in the packaging, located within the container of the article, or sewn into a garment. Further, RFID tags are manufactured with a unique identification number which is typically a simple serial number of a few bytes with a check digit attached. This identification number is typically incorporated into the RFID tag during its manufacture. The user cannot alter this serial/identification number, and manufacturers guarantee that each RFID tag serial number is used only once and is, therefore, unique. Such read-only RFID tags typically are permanently attached to an article to be identified and/or tracked and, once attached, the serial number of the tag is associated with its host article in a computer database.

Frequently, a number of retail and other items are metallic in some form. These metallic retail items typically require an RFID tag or strap to be attached to them in order to track the item. However, it is sometimes necessary for these RFID tags or straps also to be removable and/or only be active for a limited distance. Therefore, there exists in the art a long felt need to manufacture a reactive RFID strap that can be removably secured to a metallic item. There also exists in the art a long felt need for a reactive RFID strap that induces a current to flow in the metallic object. In one embodiment, the present invention discloses a reactive RFID strap that can be secured to a plastic clip for easy attachment to a metallic object; and if the size and shape of the metallic object are suitable, the reactive RFID strap can induce a far field RFID antenna response.

US 2010/051703 A1 discusses a radio frequency identification tag which includes a substrate and an antenna pattern disposed on an outer peripheral side surface of the substrate. US 2005/093678 A1 discusses a radio frequency identification system which includes an RFID device and a conductive material that cooperates with the RFID device.

### SUMMARY

The scope of protection of the present invention is defined by the appended independent claims. Optional features are specified by the dependent claims.

To the accomplishment of the foregoing and related ends, certain illustrative aspects of the disclosed innovation are described herein in connection with the following description and the annexed drawings. These aspects are indicative, however, of but a few of the various ways in which the principles disclosed herein can be employed and is intended to include all such aspects and their equivalents. Other advantages and novel features will become apparent from the following detailed description when considered in conjunction with the drawings.

### BRIEF DESCRIPTION OF THE DRAWINGS

FIG. 1 illustrates a top perspective view of a reactive RFID strap component in proximity to and coupled with a metallic object in accordance with the disclosed architecture.
FIG. 2A illustrates a front perspective view of one possible embodiment of the clip component of the present invention in accordance with the disclosed architecture.
FIG. 2B illustrates a front perspective view of an alternative embodiment of the clip component of the present invention in accordance with the disclosed architecture.
FIG. 3A illustrates a front perspective view of an embodiment of the tab component with the conductor component forming a conductive loop thereon in proximity to a metallic object and in accordance with the disclosed architecture.
FIG. 3B illustrates a front perspective view of an alternative embodiment of the conductor component forming a U-shaped conductor on the tab component in proximity to a metallic object and in accordance with the disclosed architecture.
FIG. 3C illustrates a front perspective view of an alternative embodiment of the conductor component forming a conductive loop mounted on the frame and encircling the tab component in proximity to a metallic object and in accordance with the disclosed architecture.
FIG. 4 illustrates a flowchart of the basic process for manufacturing the reactive RFID strap component of the present invention in accordance with the disclosed architecture.
FIG. 5A illustrates a front perspective view of the reactive RFID strap component before being modified with surface deflections in accordance with the disclosed architecture.
FIG. 5B illustrates a side perspective view of the reactive RFID strap component of FIG. 5A before being modified with surface deflections in accordance with the disclosed architecture.
FIG. 5C illustrates a front perspective view of the reactive RFID strap component after being modified with surface deflections in accordance with the disclosed architecture.
FIG. 5D illustrates a side perspective view of the reactive RFID strap component of FIG. 5C after being modified with surface deflections in accordance with the disclosed architecture.
FIG. 6A illustrates a front perspective view of an embodiment of the reactive RFID strap component modified with additional adhesive fixing points in accordance with the disclosed architecture.
FIG. 6B illustrates a front perspective view of an alternative embodiment of the reactive RFID strap component modified with additional adhesive fixing points in accordance with the disclosed architecture.
FIG. 7A illustrates a front perspective view of the reactive RFID strap component modified with tabs and designed to engage an opening already formed in the metallic object in accordance with the disclosed architecture.
FIG. 7B illustrates a side perspective view of the reactive RFID strap component modified with tabs and designed to engage an opening already formed in the metallic object in accordance with the disclosed architecture.
FIG. 7C illustrates a front perspective view of the reactive RFID strap component modified with tabs and engaging an opening formed in the metallic object in accordance with the disclosed architecture.
FIG. 8 illustrates a top perspective view of the reactive RFID strap component secured to a metallic bag in accordance with the disclosed architecture.
FIG. 9 illustrates a graph of the far field response in accordance with the disclosed architecture.
FIG. 10 illustrates a top perspective view of the reactive RFID strap component secured to a metallic box in accordance with the disclosed architecture.
FIG. 11 illustrates a graph of the far field response in accordance with the disclosed architecture.
FIG. 12 illustrates an exploded view of a reactive RFID strap and an antenna coupled together to form a RFID tag, not in accordance with the present invention.
FIG. 13 illustrates an exploded view of one possible embodiment of the RFID tag adapted for use on a non-planar object, not in accordance with the present invention.
FIG. 14 illustrates a flowchart of the basic process for assembling the RFID tag on the surface of the non-planar object, not in accordance with the present invention.
FIG. 15 illustrates a flowchart of a basic process for scanning a surface of a non-planar object and assembling an RFID tag on the surface of the non-planar object, not in accordance with the present invention.
FIG. 16 illustrates a flowchart of the basic process for manufacturing the RFID tag on the surface of the non-planar object, not in accordance with the present invention.
FIG. 17 illustrates a flowchart of an alternative embodiment of manufacturing a RFID tag on a surface of a non-planar object further comprising first depositing a separator on the surface of the non-planar object, not in accordance with the present invention.
FIG. 18 illustrates a flowchart of adapting an antenna of the RFID tag to conform to the separator of the present invention, not in accordance with the present invention.
FIG. 19 illustrates a flowchart of adapting the separator and then adapting an antenna of the RFID tag to conform to the separator, not in accordance with the present invention.
FIG. 20A illustrates a flowchart of adapting the separator to comprise a ramped portion and then adapting an antenna of the RFID tag to conform to the separator, not in accordance with the present invention.
FIG. 20B illustrates a flowchart of illustrating first depositing a base conductor on the surface of the non-planar object before the separator, not in accordance with the present invention.

### DETAILED DESCRIPTION

The innovation is now described with reference to the drawings, wherein like reference numerals are used to refer to like elements throughout. In the following description, for purposes of explanation, numerous specific details are set forth in order to provide a thorough understanding thereof. It may be evident, however, that the innovation can be practiced without these specific details. In other instances, well-known structures and devices are shown in block diagram form in order to facilitate a description thereof.

### I. RFID Tags

### A. Metallic Items or Objects

In one embodiment, the reactive RFID strap components contain an RFID chip or strap and a conductor component which are both secured to a clip component, such as a clip component formed of plastic or some other suitable material. The reactive RFID strap component is then attached to a metallic item or object. If the size and shape of the metallic item is suitable, the reactive RFID strap component is capable of inducing a far field antenna response, wherein coupling can be between electric fields, magnetic fields, or both with the coupling related to the structure of the reactive RFID strap component and its proximity to the metallic item.

In some embodiments, the RFID chip and conductor component can be secured to the clip component in multiple ways. For example, the conductor component can be formed in a conductive loop with the RFID chip in series, with coupling primarily by the magnetic fields. Alternatively, the conductor component can be a generally U-shaped conductor on the frame which couples to a metallic item primarily by the electric fields. In other embodiments, the conductor component can be a conductive loop that is mounted on the frame and encircles the tab of the clip component. The various alternative embodiments of the clip components can be modified to help secure the clip component to the metallic item by adding surface deflections, adhesive fixing points, or tabs designed to engage with an opening or plurality of openings already formed in the metallic item or package to provide a more secure attachment thereto. Furthermore, various methods of manufacturing a RFID tag comprising an antenna and a reactive RFID strap on a three dimensional (3D) or non-planar object are also disclosed.

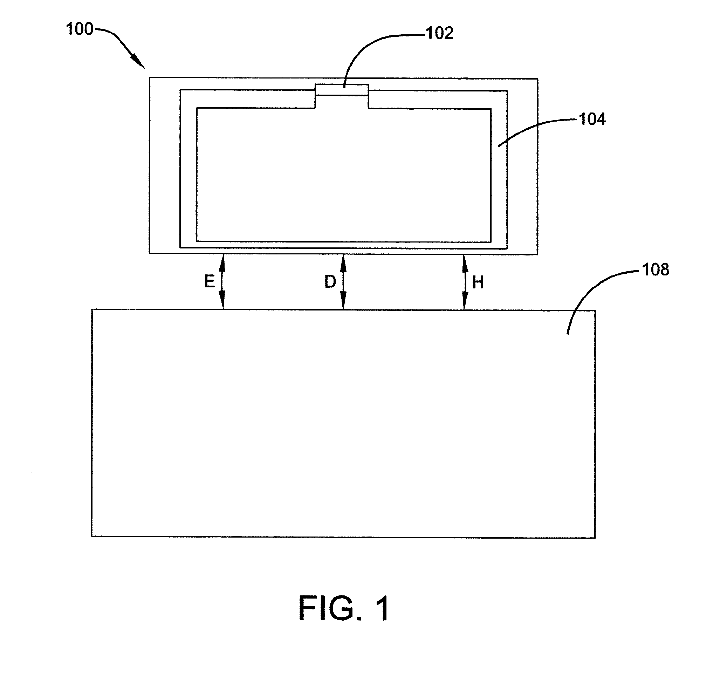

Referring initially to the drawings, FIG. 1 illustrates a top perspective view of a reactive RFID strap component 100 in proximity with and coupled to a metallic item 108 or other conductive object. The reactive RFID strap component 100 is typically a reactive strap which induces an antenna response into the metallic item 108, and is integrated into a plastic clip but can be any reactive object as is known in the art. Further, reactive RFID strap component 100 can be any suitable size, shape, and/or configuration as is known in the art without affecting the overall concept of the invention. One of ordinary skill in the art will appreciate that the shape, size and configuration of the reactive RFID strap component 100 shown in the various FIGS. is for illustrative purposes only, and that many other shapes and sizes of the reactive RFID strap component 100 are well within the scope of the present disclosure. Although the dimensions of the reactive RFID strap component 100 (i.e., length, width, and height) are important design parameters for good performance, the reactive RFID strap component 100 may be any shape, size or configuration that ensures optimal performance during use and satisfies user need or preference.

Typically, the reactive RFID strap component 100 is comprised of a RFID chip or strap 102 and a conductor component 104 which are both secured to a clip component 106. The reactive RFID strap component 100 is then attached to a metallic item 108 or other suitable conductive object as is known in the art. If the size and shape of the metallic item 108 are sufficient, the reactive RFID strap component 100 can induce a far field antenna response. For example, coupling can be via electric fields (E), magnetic fields (H), or commonly, by both electric (E) and magnetic (H) fields with coupling being related to the structure of the reactive RFID strap component 100 and its proximity to the metallic item 108. Thus, coupling of the reactive RFID strap component 100 to the metallic item 108 in the electric (E) and magnetic (H) fields is somewhat dependent upon geometry.

The reactive RFID strap components 100 can be versatile, such that they can be altered depending on the needs and/or wants of a user. For example, the reactive RFID strap components 100 can be produced to be relatively flat so they can be used in a roll to roll process, or other suitable distribution process as is known in the art. Further, the reactive RFID strap components 100 are designed to slip over the edges of metallic items 108 and could incorporate a stop such that they only transmit a certain distance. Additionally, the reactive RFID strap components 100 of the present invention in their various possible alternative embodiments can comprise an adhesive with a release liner making the reactive RFID strap components 100 easy to attach to and remove from the metallic items 108. The profile of the strap component 100, or the amount of material that sticks up above the metallic item 108, can be varied as well, depending on the needs and/or wants of a user. Overall, the reactive RFID strap components 100 are produced to be quite robust or strong and easily applied to the metallic items 108.

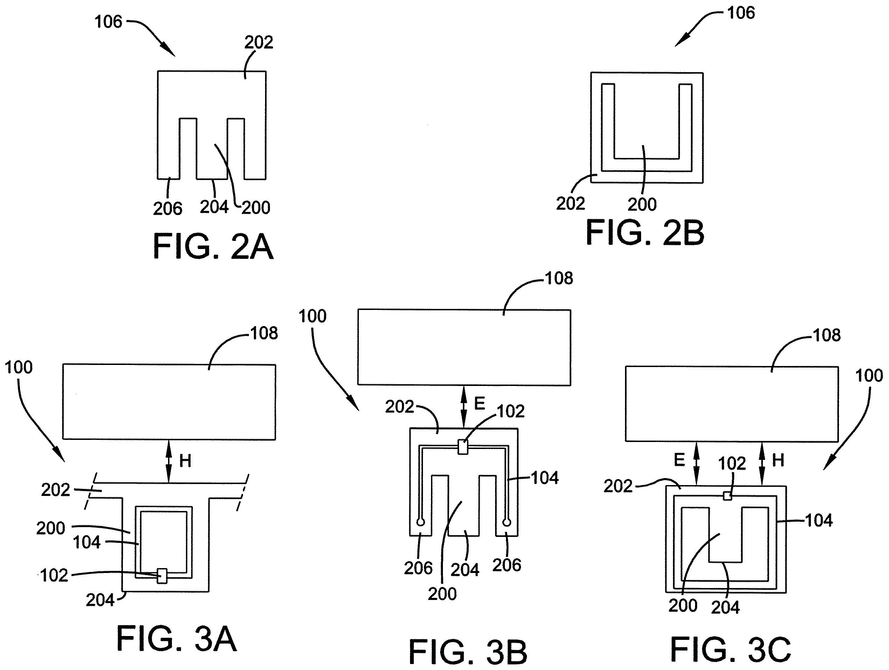

As shown in FIGS. 2A-B, the RFID chip 102 and the conductor component 104 may both be secured to a clip component 106. More specifically, FIG. 2A illustrates a front perspective view of one possible embodiment of the clip component 106, and FIG. 2B illustrates a front perspective view of an alternative embodiment of the clip component. Typically, the clip component 106 is a plastic clip, but can also be made of any suitable material as is known in the art. Further, the clip component 106 can be any suitable size, shape, and/or configuration as is known in the art without affecting the overall concept of the invention. One of ordinary skill in the art will appreciate that the shape, size and configuration of the clip component 106 shown in FIGS. 2A-B is for illustrative purposes only, and that many other shapes and sizes of the clip component 106 are well within the scope of the present disclosure. Although the dimensions of the clip component 106 (i.e., length, width, and height) are important design parameters for good performance, the clip component 106 may be any shape or size that ensures optimal performance during use. Further, the clip component 106 can typically be utilized in two basic forms as shown, however the clip component 106 can also utilize other suitable forms as is known in the art.

As shown in FIG. 2A, the clip component 106 comprises a tab component 200 and a frame component 202. The tab component 200 comprises an edge section 204 that is aligned with the outside edge section 206 of the frame component 202. As shown in FIG. 2B, the clip component 106 comprises the tab component 200 surrounded by the frame component 202 on all edges. Thus, the two different forms of clip components 106 comprise different mechanical properties. For example, the clip component 106 of FIG. 2A would be easier to fit to a metallic item 108, as at the end of the manufacturing process, the tab component 200 can be deflected and can easily be pushed over the aligned edge sections 204 and 206. However, the clip component 106 form of FIG. 2A is less robust than that shown in FIG. 2B. Conversely, while the form of clip component 106 of FIG. 2B is more difficult to attach to a metallic item or object 108 compared to the form of clip component shown in FIG. 2A, the clip component form of FIG. 2B is more robust than the clip component form disclosed in FIG. 2A and will typically have a longer useful life.

As shown in FIGS. 3A-C, the RFID chip 102 and the conductor component 104 are both secured to a clip component 106. The RFID chip 102 and the conductor component 104 can be secured to the clip component 106 in multiple ways depending on the wants and/or needs of a user such as, for example, with adhesives. Further, the conductor component 104 can be any suitable size, shape, and/or configuration as is known in the art without affecting the overall concept of the invention. One of ordinary skill in the art will appreciate that the shape, size and configuration of the conductor component 104 shown in FIGS. 3A-C is for illustrative purposes only, and that many other shapes and sizes of the conductor component 104 are well within the scope of the present disclosure. Although the dimensions of the conductor component 104 (i.e., length, width, and height) are important design parameters for good performance, the conductor component 104 may be any shape or size that ensures optimal performance during use and that satisfies user need.

Further, the conductor component 104 can typically be fitted to the clip component 106 in a multitude of different ways such as those shown, for example, in FIGS. 3A-C. However, the conductor component 104 can also be fitted to the clip component 106 in any other suitable way as is known in the art. As shown in FIG. 3A, the conductor component 104 can be positioned in a conductive loop with the RFID chip 102 in series, thus coupling primarily in the magnetic (H) fields and positioned on the tab component 200. Alternatively, as shown in FIG. 3B, the conductor component 104 can be formed as a generally U-shaped conductor on the frame component 202, which couples to the metallic item 108 primarily by electric (E) field coupling. In a further alternative embodiment shown in FIG. 3C, the conductor component 104 may be positioned in a conductive loop with the RFID chip 102 in series and mounted on the frame component 202 such that it encircles the tab component 200.

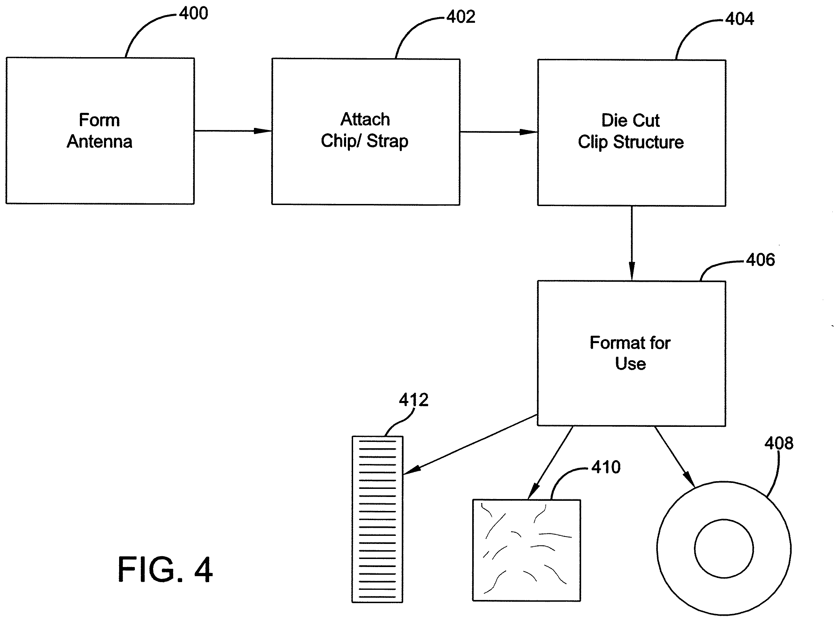

FIG. 4 illustrates a flowchart of a basic method of manufacturing a reactive RFID strap component 100 for use with a metallic item 108. At 400, the method comprises forming an antenna on the surface of a suitable material, such as plastic, for example, polyethylene terephthalate (PET). Ideally, the material is thick enough to be self-supporting as a clip component, but thin enough to be processed roll to roll, for example 0.5 mm thick, or any other suitable thickness as is known in the art. Alternatively, a thick card or corrugated material may be used, or any other suitable material as is known in the art, if the roll to roll process is not used. Specifically, the antenna may be formed via pattern printing an adhesive, laminating the foil, cutting around the pattern, and stripping the matrix.

At 402, a RFID chip or strap is then attached to the antenna, and at 404 the clip component is die cut such that a user cuts around the critical structural elements. The clip component may be retained in the web by a series of tabs or be positioned on a release liner and attached by an adhesive. At 406, the clip components may then be formatted for use, such as by placing the clip components in rolls, canisters, or bags. For example, at 408, the clip components can be formatted in rolls, the rolls are then used in a printer and dispensed into a product. At 410, the clip components are cut into single units and dropped into a bag for manual assembly. At 412, the clip components are stacked into a tube or canister for use with an applicator gun.

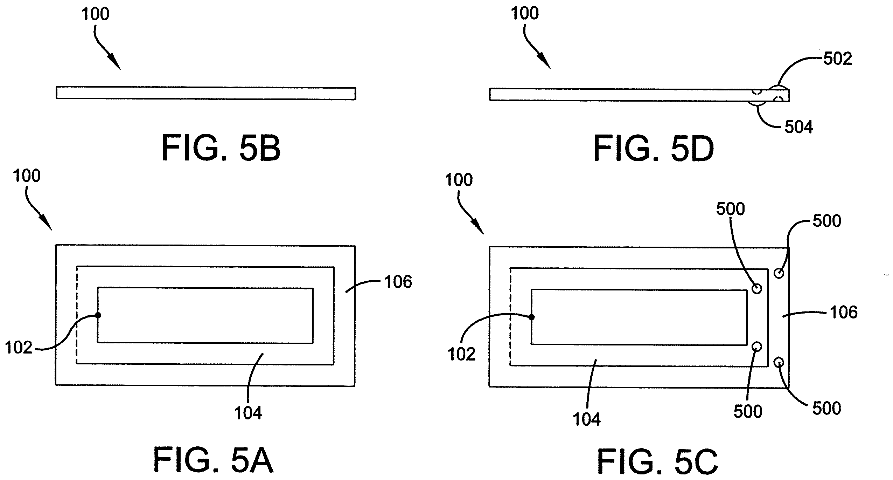

As shown in FIGS. 5A-B, the reactive RFID strap component 100 may be modified via tools that apply heat and/or pressure to create deflections 500. Alternatively, other suitable tools known in the art for making deflections 500 may be used, for example, punches. More specifically, FIGS. 5A-B illustrate front and side views of the reactive RFID strap component 100 before being shaped by the heat and/or pressure tool, or an alternative tool, to create deflections 500.

Conversely, FIGS. 5B-C illustrate front and side views of the reactive RFID strap component 100 post-deflection creating process, namely after being shaped by a tool that uses heat and/or pressure, or other means, to form deflections 500 therein. The deflections 500 can either be 3D raised bump structures 502 or lowered bump structures 504 on the surface of the reactive RFID strap component 100. The deflections 500 comprise surface bumps or catches which help to attach the clip component 106 to the conductor component 104 in a secure manner.

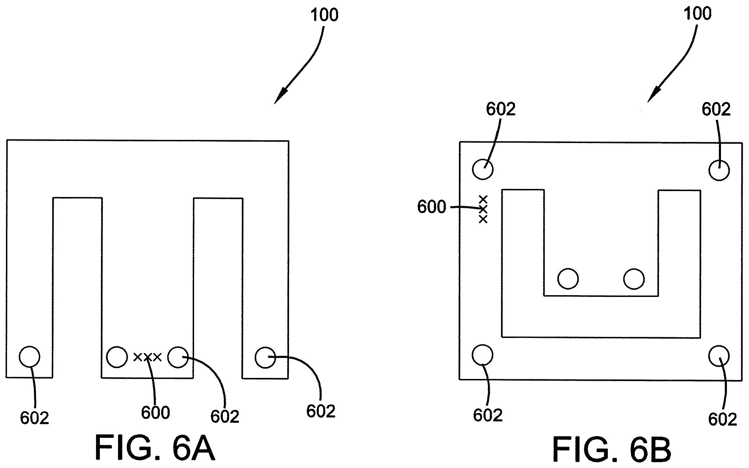

As shown in FIGS. 6A-B, the reactive RFID strap component 100 can further comprise additional grip 600 or adhesive fixing points 602 to better secure the clip component 106. More specifically, FIG. 6A illustrates a front perspective view of an embodiment of the reactive RFID strap component 100 modified with additional adhesive grips 600 and adhesive fixing points 602, and FIG. 6B illustrates a front perspective view of an alternative embodiment of the reactive RFID strap component 100 modified with additional grips 600 and adhesive fixing points 602. Additional grips 600 and/or adhesive fixing points 602 may be added by printing or any other suitable form of dispensing as is known in the art. The grip 600 and adhesive fixing points 602 are typically added to the surface of the reactive RFID strap component 100, but may also be added to any other suitable area as is known in the art.

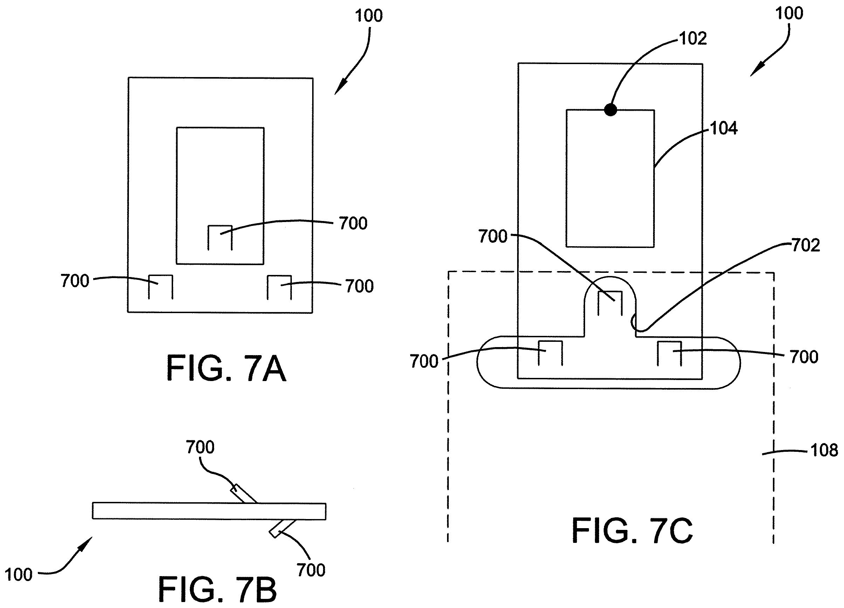

Additionally, as shown in FIGS. 7A-C, the reactive RFID strap component 100 may further comprise a plurality of tabs 700 formed on its surface. As shown in FIG. 7A, any number of tabs 700 can be used depending on the wants and/or needs of a particular user. Specifically, the tabs 700 can be non-return flaps that are pushed out of the reactive RFID strap component 100 (see FIG. 7B). As shown in FIG. 7C, the tabs 700 engage the metallic item 108. Typically, the tabs 700 engage a hole or opening 702 positioned in the metallic item 108, or any other suitable area of the metallic item 108 as is known in the art. The hole or opening 702 is typically the opening already formed in the metallic item or object 108 and that is used for hanging the item 108 on a display rail or hook.

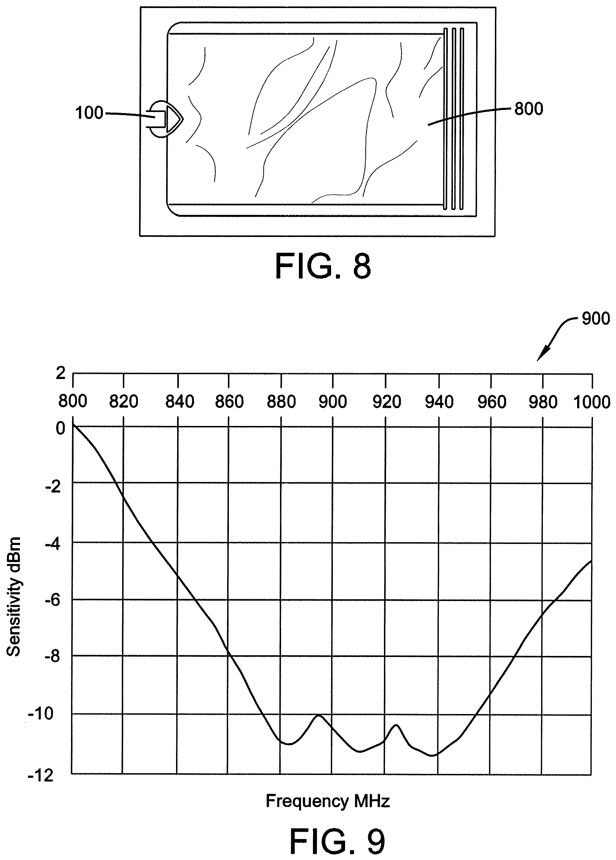

As shown in FIGS. 8, the reactive RFID strap component 100 may be secured to a metallic bag 800 to induce a far field antenna response, wherein coupling can be between electric fields, magnetic fields, or both. Further, FIG. 9 illustrates a graph of the far field response in accordance with the disclosed architecture, and which illustrates an approximate -11dBm sensitivity over the FCC band.

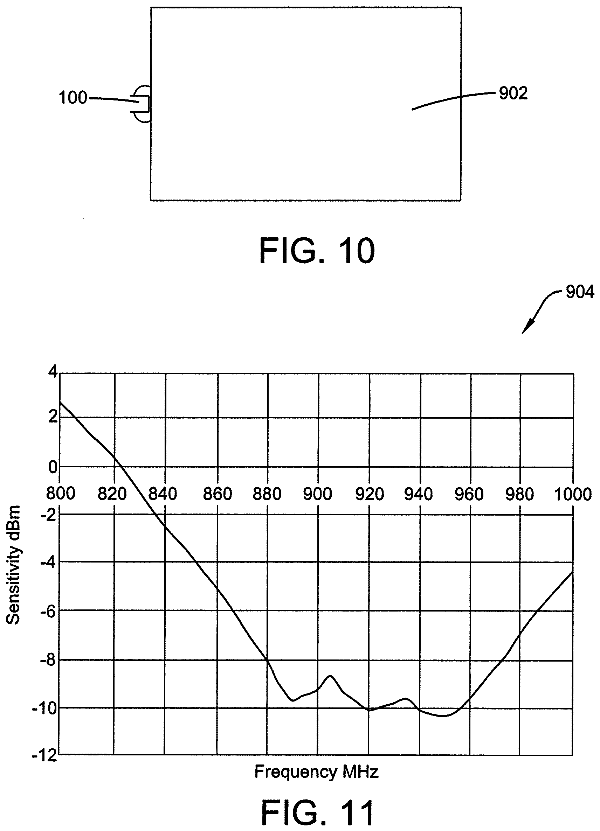

As shown in FIG. 10, the reactive RFID strap component 100 may also be secured to a metallic box 902 to induce a far field antenna response, wherein coupling can be between electric fields, magnetic fields, or both. Further, FIG. 11 illustrates a graph of the far field response in accordance with the disclosed architecture, and which illustrates an approximate -10 dBm sensitivity over the FCC band.

### B. Three-Dimensional (3D) Objects

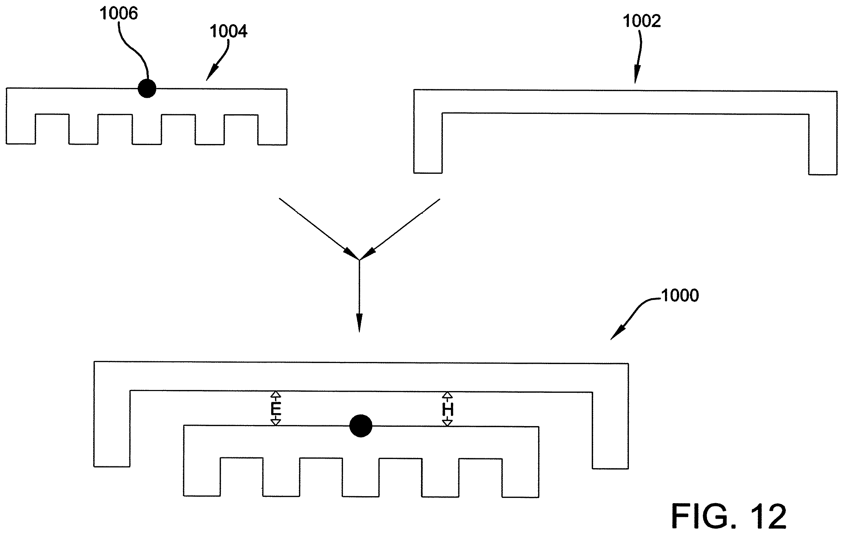

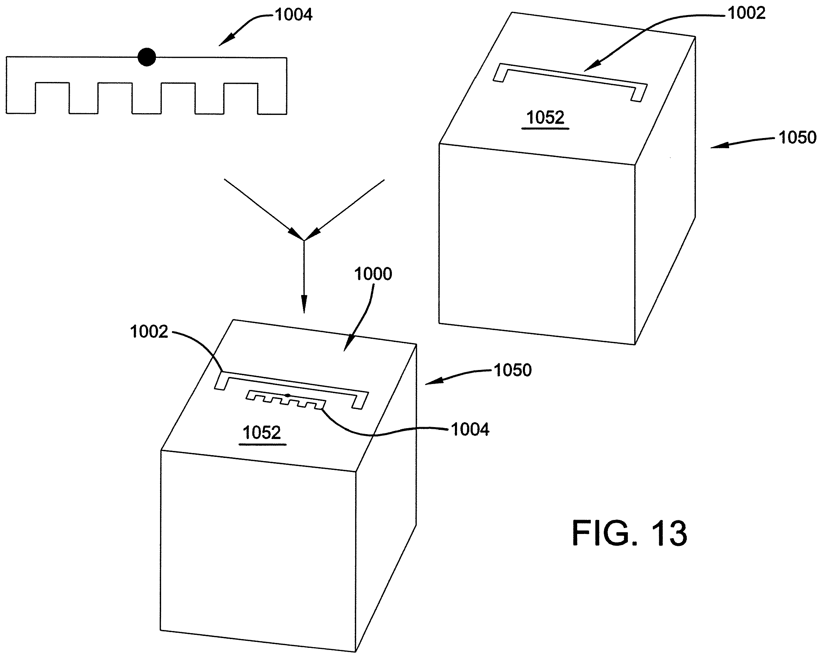

FIGS. 12-14 illustrate a, RFID tag 1000 positioned on a surface 1052 of a non-planar object 1050, and a method of manufacturing the same. The RFID tag 1000 contains an antenna 1002 and a reactive RFID strap 1004. The reactive RFID strap 1004 further contains an RFID chip 1006. Both the antenna 1002 and the reactive RFID strap 1004 can be any suitable size, shape, and/or configuration as is known in the art without affecting the overall concept. One of ordinary skill in the art will appreciate that the shape, size and configuration of both the antenna 1002 and the reactive RFID strap 1004 shown in the various FIGS. are for illustrative purposes only, and that many other shapes and sizes of both the antenna 1002 and the reactive RFID strap 1004 are well within the scope of the present disclosure. Although the dimensions of both the antenna 1002 and the reactive RFID strap 1004 (i.e., length, width, and height) are important design parameters for good performance, both the antenna 1002 and the reactive RFID strap 1004 may be any shape, size or configuration that ensures optimal performance during use and satisfies user need and/or preference.

Typically, the RFID tag 1000 can induce a far field antenna response. For example, coupling of the antenna 1002 to the reactive RFID strap 1004 can be via electric fields (E), magnetic fields (H), or commonly, by both electric (E) and magnetic (H) fields with coupling being related to the structure of the RFID tag 1000. Therefore, coupling of the antenna 1002 to the reactive RFID strap 1004 in the electric (E) and magnetic (H) fields is somewhat dependent upon geometry. The antenna 1002 is conductive and is typically formed from a variety of conductive materials, such as, but not limited to, metal foils, cut mechanically or by a laser, printed conductive inks, or vapor deposited materials. Furthermore, the RFID tag 100 is formed by positioning the antenna 1002 near the reactive RFID strap 1004.

The generally non-planar object 1050 may be a box, bag, bottle, irregularly shaped product, or any other three dimensional object having at least one non-planar surface. It will be appreciated that the RFID tag 1000 may be formed on the surface of a product itself, or on its primary or secondary packaging as desired, any of which may serve as the non-planar object 1050.

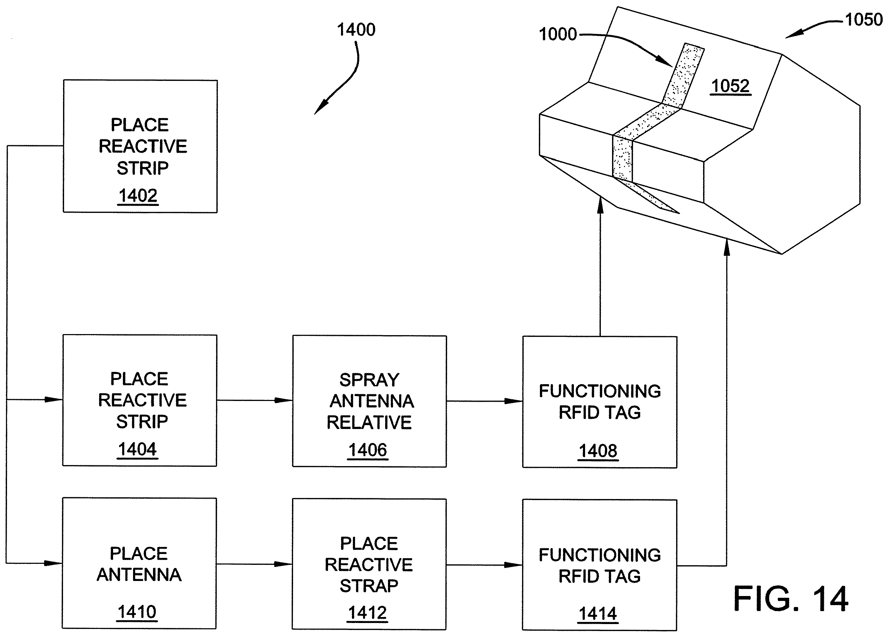

FIG. 14 illustrates a method 1400 of manufacturing the RFID tag 1000 on the surface 1052 of the non-planar object 1050. The method begins at 1402 where the non-planar object 1050 for receiving the RFID tag 1000 is selected. The construction of the RFID tag 1000 begins by forming the antenna 1002 on the surface 1052 of the non-planar object 1050 at step 1410. At step 1412, the reactive RFID strap 1004 is then positioned on the surface 1052 of the non-planar object 1050. The reactive RFID strap 1004 is then coupled to the antenna 1002 to induce a far field antenna response as a functioning RFID tag 1000 at step 1414.

Alternatively, and as also illustrated in FIG. 14, the method 1400 may begin at step 1402 wherein the non-planar object 1050 for receiving the RFID tag 1000 is selected. At step 1404, the construction of the RFID tag 1000 may begin by forming and positioning the reactive RFID strap 1004 on the surface 1052 of the non-planar object 1050, prior to forming the antenna 1002. Then, at step 1406, the antenna 1002 is formed on the surface 1052 of the non-planar object 1050, and the reactive RFID strap 1004 is coupled to the antenna 1002 to induce a far field antenna response as a functioning RFID tag 1000 at step 1408. More specifically, the coupling of the antenna 1002 to the reactive RFID strap 1004 can be via electric fields (E), magnetic fields (H), or by both electric (E) and magnetic (H) fields. Additionally, the reactive RFID strap 1004 may be physically coupled to the antenna 1002 if so desired.

The antenna 1002 may be deposited onto the non-planar object 1050 by spraying or printing a conductive ink to form the antenna 1002. The ability to choose between spraying or printing to deposit a conductor onto a non-planar object, where an antenna shape may be adapted to function optimally, provides the manufacturer or other user with greater design flexibility and choice relative to the location on the non-planar object 1050 where an RFID tag may be formed. For example, on a bottle, it is common to try to form an RFID tag antenna on a flat surface on either the base or a top of the bottle. However, by using the methods 1400 depicted in FIG. 14, a user may form the antenna 1002 on any portion of the bottle surface, and adapt the same to the shape or contour of the bottle, so that in conjunction with the reactive RFID strap 1004 that is flexible enough to conform to the surface 1052, a high performance RFID tag 1000 may be created. It must also be appreciated that, if the reactive RFID strap 1004 is not adequately flexible to attach to a highly complex three dimensional surface area where the antenna 1002 is formed, the reactive RFID strap 1004 may be placed on a relatively flat area and the antenna 1002 sprayed to create a physical connection between the antenna 1002 and the reactive RFID strap 1004, thereby forming the final RFID tag 1000.

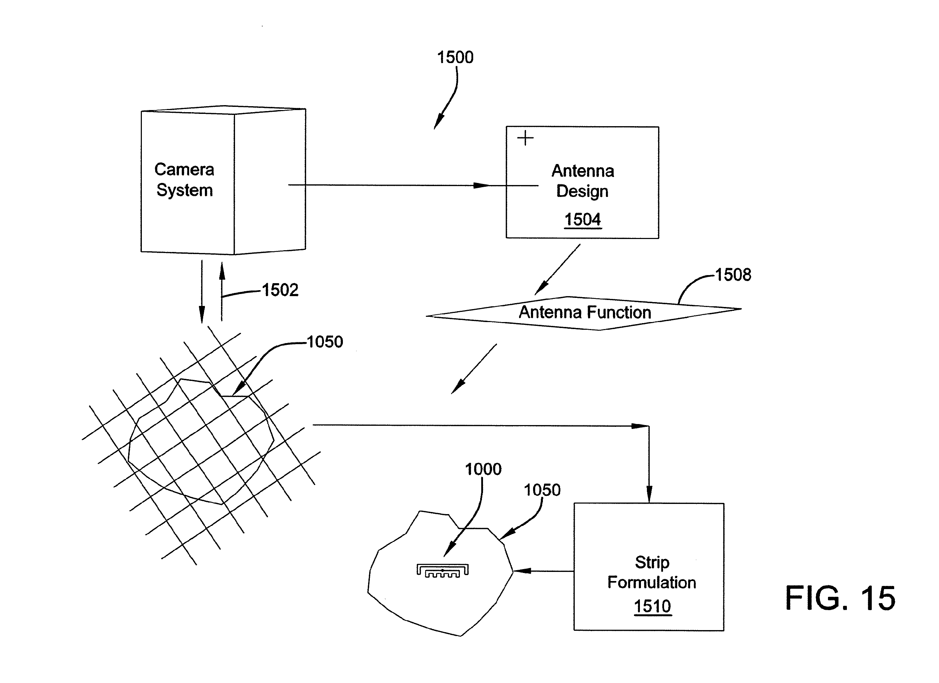

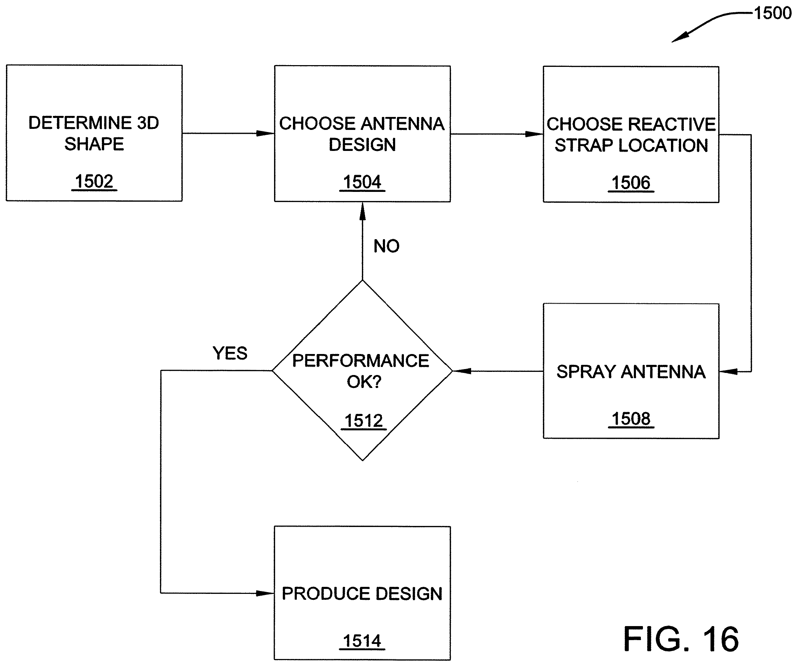

FIGS. 15 and 16 illustrate a method 1500 of manufacturing a RFID tag 1000 adapted for a surface 1052 of a non-planar object 1050 based on the object shape and/or composition. More specifically, the method 1500 utilizes a camera system and a laser grid or the like to precisely scan the non-planar object 1050 onto which the antenna will be formed to insure that the antenna is correctly created, as there may be variations in the non-planar object 1050 and/or its placement on a production line. As with the prior methods 1400 depicted in FIG. 14, the reactive RFID strap 1004 may be placed on the surface 1052 of the non-planar object 1050 before or after creation of the antenna 1002 to form the high performance RFID tag 1000.

More specifically, the method 1500 begins at step 1502 by determining the three dimensional position and shape of the non-planar object 1050 as the camera system scans the surface 1052. At step 1504, a design for an antenna 1002 suitable for a chosen location along the surface 1052 of the non-planar object 1050 is selected, compensating for surface shape and position. A design of a reactive RFID strap 1004 and a position for attaching the reactive RFID strap 1004 to the surface 1052 of the non-planar object 1050 is chosen at step 1506. At steps 1508 and 1510, the antenna 1002 is then sprayed or created onto the surface 1052 of the non-planar object 1050, and coupled to the reactive RFID strap 1004 to form the RFID tag 1000 on the surface 1052 of the non-planar object 1050 to produce a far field antenna response. At step 1512, a measurement of RF performance is conducted, either inline or offline. If the RF performance is acceptable at step 1512, the method ends at step 1514 with the design having been successfully produced. If, on the other hand, the performance is not acceptable, the method of manufacture returns to step 1504 and the antenna design is adapted to optimize performance.

Alternatively, the reactive RFID strap 1004 may be positioned on the surface 1052 of the non-planar object 1050 before creation of the antenna 1002. Additionally, the antenna 1002 may also be printed or otherwise positioned on the surface 1052 of the non-planar object 1050. The coupling of the antenna 1002 to the reactive RFID strap 1004 can be via electric fields (E), magnetic fields (H), or by both electric (E) and magnetic (H) fields. Additionally, the reactive RFID strap 1004 may be physically coupled to the antenna 1002 if desired.

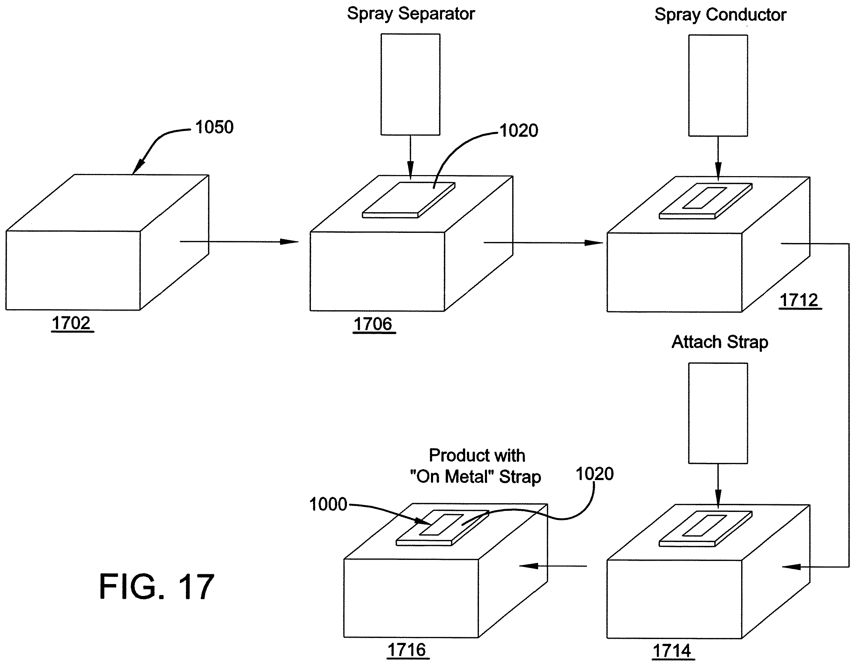

FIGS. 17-20B illustrate a method 1700 of manufacturing a RFID tag 1000 adapted for a non-planar object 1050. The method 1700 is adapted for creating a RFID tag 1000 comprising more than one layer, which is advantageous as metal and liquid objects can cause a significant drop in the performance of a standard RFID tag. As such, an RFID tag design utilizing an antenna formed on a separating material, such as a foam plastic or similar material with a high dielectric constant, for example, a flexible plastic with a ceramic dielectric powder such as, titanium dioxide or a barium titanate may be used. FIG. 17 illustrates method 1700, wherein the RFID tag 1000 is formed on the non-planar object 1050 by first depositing a separator 1020, then an antenna 1002, and a reactive RFID strap 1004 to form a "surface insensitive" RFID tag 1000.

More specifically, method of manufacturing a RFID tag 1000 adapted for a non-planar object 1050 begins at step 1702, wherein the non-planar object 1050 for receiving the RFID tag 1000 is selected. At step 1706, the construction of the RFID tag 1000 begins with the separator 1020 being deposited onto the non-planar object 1050, for example, by spraying. Next, at step 1712, an antenna 1002 is formed on the separator 1020. As previously stated, the antenna 1002 may be sprayed, printed, or otherwise positioned atop the separator 1020. At step 1714, a reactive RFID strap 1004 is attached to the separator 1020, and coupled to the antenna 1002 to create the RFID tag 1000 with a far field antenna response at step 1716. Alternatively, the reactive RFID strap 1004 may be positioned on the separator 1020 before creation of the RFID antenna 1002. The coupling of the antenna 1002 to the reactive RFID strap 1004 can be via electric fields (E), magnetic fields (H), or by both electric (E) and magnetic (H) fields. Additionally, the reactive RFID strap 1004 may be physically coupled to the RFID antenna 1002 if desired.

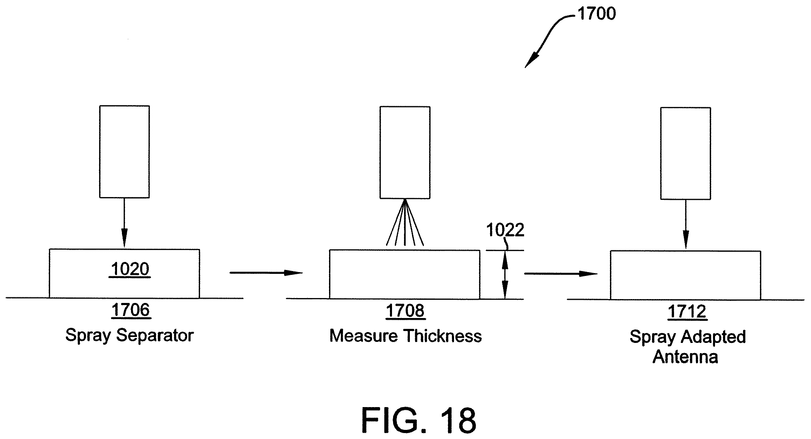

FIG. 18 illustrates an alternative version of the method 1700, wherein the antenna shape and reactive RFID strap location are adapted to a thickness measurement 1022 of the separator 1020. More specifically, after the separator 1020 is deposited onto the surface of the non-planar object 1050 at step 1706, the thickness 1022 of the separator 1020 is measured at step 1708. At step 1712, the antenna 1002 may be sprayed, printed, or otherwise positioned atop the separator 1020. At step 1714, a reactive RFID strap 1004 is attached to the separator 1020, and coupled to the antenna 1002 to create the RFID tag 1000 with a far field antenna response at step 1716 as before. It will be appreciated that the separator 1020 does not need to be applied to a larger area of the non-planar object 1050 than the area required for the RFID tag 1000. For example, the separator 1020 may be created only directly underneath the RFID tag 1000, thereby blocking less of a surface 1052 of the non-planar object 1050 so as to not obscure other desirable qualities such as branding or marking.

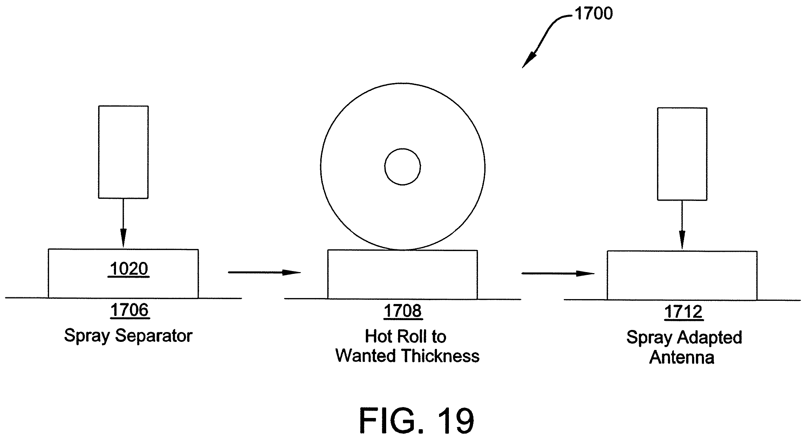

FIG. 19 illustrates a further alternative version of the method 1700, wherein the accuracy of the initially applied material for the separator 1020 is insufficient to permit formation of a stable RFID tag 1000. In this particular example not according to the present invention, the thickness 1022 of the separator material 1020 is adapted to insure stability of the RFID tag 1000, and may be rolled to a required or desired thickness. Further, if the separator material 1020 is capable of curing with heat, the roller may be suitably heated for use to both roll and cure the separator material. More specifically, after the separator material 1020 is deposited onto the surface of the non-planar object 1050 at step 1706, the desired thickness 1022 of the separator material 1020 may be achieved at step 1708 by, for example, hot roll. The separator material 1020 may also be cured if required or otherwise desired at this stage. At step 1712, the antenna 1002 may then be sprayed, printed, or otherwise positioned atop the separator material 1020. Then, at step 1714 (as shown in FIG. 17), a reactive RFID strap 1004 is attached to the separator material 1020 and coupled to the antenna 1002 to create the RFID tag 1000 with a far field antenna response as previously described.

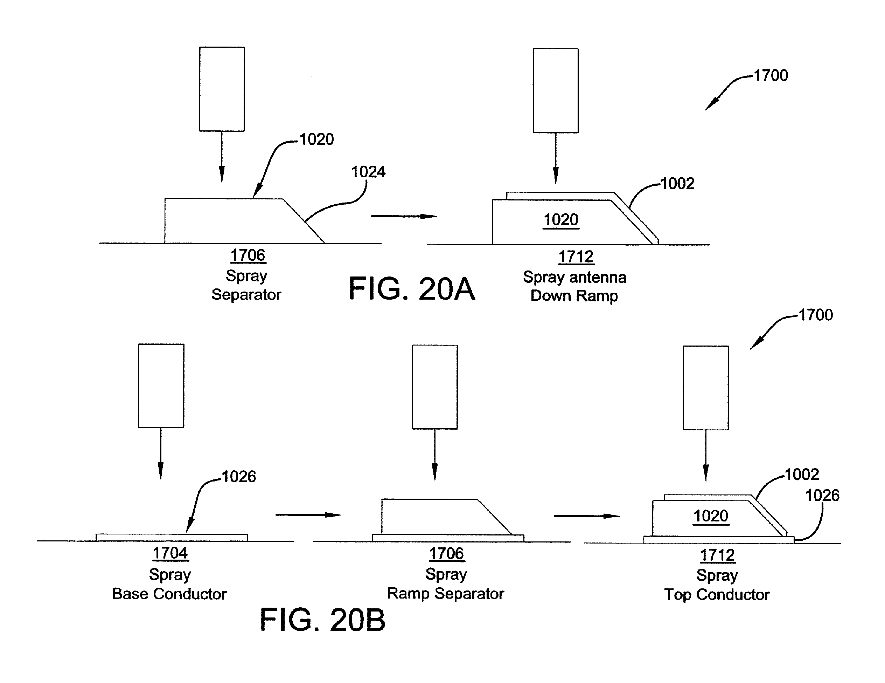

FIG. 20A illustrates an alternative version of the method 1700, wherein at least a portion of the antenna structure is deflected with respect to another portion of the antenna structure. The ability to create a deflected antenna structure is particularly desirable, as successfully creating conductors around sharp corners by printing is difficult. More specifically, the separator material 1020 may further comprise a ramped portion 1024, and be sprayed or otherwise applied so that the ramped portion 1024 is sloped or tapered downwardly to meet a surface 1052 of the non-planar object 1050. Once the separator material 1020 with the ramped portion 1024 is deposited at step 1706, the antenna 1002 is printed or sprayed onto the separator material 1020, including down along the ramped portion 1024 and into proximity contact with the surface 1052 of the non-planar object 1050, as best shown in FIG. 20A at step 1712. The reactive RFID strap 1004 may then be attached to the separator material 1020 and coupled to the antenna 1002 to create the RFID tag 1000 with a far field antenna response at 1716 as described above. This method is particularly effective for forming "on-metal" type RFID tags, wherein the non-planar object 1050 has a metallic surface 1052.

FIG. 20B illustrates yet a further alternative version of the method 1700, wherein at least a portion of the antenna structure is deflected with respect to the other part of the antenna structure and the RFID tag comprises both a top and a bottom conductor. More specifically, the method 1700 further comprises first applying a base conductor 1026 to the surface 1052 of the non-planar object 1050 at step 1704. Then, at step 1706, the separator material 1020 is sprayed or otherwise deposited atop the base conductor 1026 so that the ramped portion 1024 is sloped downwardly to the base conductor 1026. Once the separator material 1020 with the ramped portion 1024 is deposited at step 1706, the antenna 1002 and reactive RFID strap 1004 are printed or sprayed onto the separator material 1020 down along the ramped portion 1024 and into proximity contact with the base conductor 1026 to create the RFID tag 1000 with a far field antenna response at step 1712. This allows for a RFID tag structure wherein the base conductor 1026 isolates the top conductor (i.e., antenna 1002) acting as the radiating antenna from the non-planar object 1050, and is particularly effective in applications in which the non-planar object 1050 contains a high loss liquid such as water.

What has been described above includes examples of the claimed subject matter. It is, of course, not possible to describe every conceivable combination of components or methodologies for purposes of describing the claimed subject matter, but one of ordinary skill in the art may recognize that many further combinations and permutations of the claimed subject matter are possible. Accordingly, the claimed subject matter is intended to embrace all such alterations, modifications and variations that fall within the scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. A reactive radio frequency identification, RFID, strap component (100) for use with a metallic object (108) comprising:
a RFID chip (102);
a conductor component (104); and
a clip component (106),
**characterized in that**
the reactive RFID strap component is configured to position in proximity to the metallic object to enable inducement of a far field antenna response, wherein the RFID strap couples to the metallic object via an electric field or a magnetic field or both an electric field and a magnetic field.

2. The reactive RFID strap component (100) of claim 1, wherein the clip component (106) is secured to the metallic object (108); and/or wherein the RFID chip (102) and the conductor component (104) are secured to the clip component.

3. The reactive RFID strap component (100) of any one of claims 1-2, wherein the clip component (106) is relatively flat and comprised of at least one surface deflection (500, 502, 504); and/or wherein the clip component is able to slip over an edge of the metallic object (108).

4. The reactive RFID strap component (100) of any one of claims 1-3, wherein the RFID strap component comprises an adhesive with a release liner.

5. The reactive RFID strap component (100) of any one of claims 1-4, wherein the clip component (106) further comprises a tab component (200) and a frame component (202).

6. The reactive RFID strap component (100) as claimed in claim 1, wherein the conductor component (104) is positioned in a conductive loop with the RFID chip (102) in series.

7. The reactive RFID strap component (100) of claim 6, wherein the clip component (106) further comprises at least one of: a surface deflection (500, 502, 504); an adhesive fixing point (602); or a tab.

8. The reactive RFID strap component (100) of claim 1, wherein the conductor component (104) couples to the metallic object primarily by electric field coupling.

9. The reactive RFID strap component (100) of claim 1, wherein the clip component (106) comprises a tab component (200) and a frame component (202), and the tab component comprises an edge section (204) that is aligned with an outside edge section (206) of the frame component.

10. The reactive RFID strap component (100) of any one of claims 6-7, wherein the clip component (106) comprises a tab component (200) encircled by a frame component (202).

11. A method of manufacturing a reactive RFID strap component comprising:
forming an antenna on a surface of a clip component (400);
attaching a RFID chip to the antenna (402);
die-cutting the clip component (404);
formatting the clip component for use with a metallic object (406) by placing the clip component in a roll, a canister, or a bag;
**characterized in that** it also comprises the step of
attaching the clip component to the metallic object to enable inducement of a far field antenna response, wherein the RFID strap couples to the metallic object via an electric field or a magnetic field or both an electric field and a magnetic field.

12. The method of manufacturing the reactive RFID strap component of claim 11, wherein the clip components are formatted in rolls and used in a printer and dispensed into a product.

13. The method of manufacturing the reactive RFID strap component of claim 11 or 12, wherein the clip component is comprised of a frame component and a tab component.

## Patentansprüche

1. Reaktive Radiofrequenz-Identifikations-Bandkomponente, RFID-Bandkomponente, (100) zur Verwendung mit einem metallischen Objekt (108), umfassend:
einen RFID-Chip (102);
eine Leiterkomponente (104); und
eine Clipkomponente (106),
**dadurch gekennzeichnet, dass**
die reaktive RFID-Bandkomponente dazu konfiguriert ist, sich in der Nähe des metallischen Objekts zu positionieren, um die Induzierung einer Fernfeldantennenreaktion zu ermöglichen, wobei sich das RFID-Band an das metallische Objekt über ein elektrisches Feld oder ein magnetisches Feld oder sowohl ein elektrisches Feld als auch ein magnetisches Feld koppelt.

2. Reaktive RFID-Bandkomponente (100) nach Anspruch 1, wobei die Clipkomponente (106) an dem metallischen Objekt (108) befestigt ist; und/oder wobei der RFID-Chip (102) und die Leiterkomponente (104) an der Clipkomponente befestigt sind.

3. Reaktive RFID-Bandkomponente (100) nach einem der Ansprüche 1-2, wobei die Clipkomponente (106) relativ flach ist und mindestens eine Oberflächenablenkung (500, 502, 504) umfasst; und/oder wobei die Clipkomponente in der Lage ist, über eine Kante des metallischen Objekts (108) zu gleiten.

4. Reaktive RFID-Bandkomponente (100) nach einem der Ansprüche 1-3, wobei die RFID-Bandkomponente einen Klebstoff mit einer Trennlage umfasst.

5. Reaktive RFID-Bandkomponente (100) nach einem der Ansprüche 1-4, wobei die Clipkomponente (106) ferner eine Laschenkomponente (200) und eine Rahmenkomponente (202) umfasst.

6. Reaktive RFID-Bandkomponente (100) nach Anspruch 1, wobei die Leiterkomponente (104) in einer Leiterschleife mit dem RFID-Chip (102) in Reihe positioniert ist.

7. Reaktive RFID-Bandkomponente (100) nach Anspruch 6, wobei die Clipkomponente (106) ferner mindestens eines von Folgendem umfasst: eine Oberflächenablenkung (500, 502, 504); einen Klebstofffixierungspunkt (602); oder eine Lasche.

8. Reaktive RFID-Bandkomponente (100) nach Anspruch 1, wobei die Leiterkomponente (104) primär durch elektrische Feldkopplung an das metallische Objekt gekoppelt ist.

9. Reaktive RFID-Bandkomponente (100) nach Anspruch 1, wobei die Clipkomponente (106) eine Laschenkomponente (200) und eine Rahmenkomponente (202) umfasst und die Laschenkomponente einen Kantenabschnitt (204) umfasst, der mit einem äußeren Kantenabschnitt (206) der Rahmenkomponente ausgerichtet ist.

10. Reaktive RFID-Bandkomponente (100) nach einem der Ansprüche 6-7, wobei die Clipkomponente (106) eine Laschenkomponente (200) umfasst, die durch eine Rahmenkomponente (202) umgeben ist.

11. Verfahren zum Herstellen einer reaktiven RFID-Bandkomponente, umfassend:
Ausbilden einer Antenne auf einer Oberfläche einer Clipkomponente (400);
Anbringen eines RFID-Chips an der Antenne (402);
Ausstanzen der Clipkomponente (404);
Formatieren der Clipkomponente zur Verwendung mit einem metallischen Objekt (406) durch Platzieren der Clipkomponente in einer Rolle, einem Kanister oder einem Beutel;
**dadurch gekennzeichnet, dass** es auch den folgenden Schritt umfasst:
Anbringen der Clipkomponente an dem metallischen Objekt, um die Induzierung einer Fernfeldantennenreaktion zu ermöglichen, wobei sich das RFID-Band an das metallische Objekt über ein elektrisches Feld oder ein magnetisches Feld oder sowohl ein elektrisches Feld als auch ein magnetisches Feld koppelt.

12. Verfahren zum Herstellen der reaktiven RFID-Bandkomponente nach Anspruch 11, wobei die Clipkomponenten in Rollen formatiert und in einem Drucker verwendet und in ein Produkt ausgegeben werden.

13. Verfahren zum Herstellen der reaktiven RFID-Bandkomponente nach Anspruch 11 oder 12, wobei die Clipkomponente eine Rahmenkomponente und eine Laschenkomponente umfasst.

## Revendications

1. Composant de bande d'identification par radiofréquence, RFID, réactive (100) destiné à être utilisé avec un objet métallique (108), comprenant :
une puce RFID (102) ;
un composant conducteur (104) ; et
un composant de connexion (106),
**caractérisé en ce que**
le composant de bande RFID réactive est configuré pour se positionner à proximité de l'objet métallique afin de permettre l'incitation d'une réponse d'antenne de champ lointain, dans lequel la bande RFID se couple à l'objet métallique via un champ électrique ou un champ magnétique ou à la fois un champ électrique et un champ magnétique.

2. Composant de bande RFID réactive (100) selon la revendication 1, dans lequel le composant de connexion (106) est fixé à l'objet métallique (108) ; et/ou dans lequel la puce RFID (102) et le composant conducteur (104) sont fixés au composant de connexion.

3. Composant de bande RFID réactive (100) selon l'une quelconque des revendications 1 à 2, dans lequel le composant de connexion (106) est relativement plat et est constitué d'au moins une déviation de surface (500, 502, 504) ; et/ou dans lequel le composant de connexion est mesure de glisser sur un bord de l'objet métallique (108).

4. Composant de bande RFID réactive (100) selon l'une quelconque des revendications 1 à 3, dans lequel le composant de bande RFID comprend un adhésif avec une doublure détachable.

5. Composant de bande RFID réactive (100) selon l'une quelconque des revendications 1 à 4, dans lequel le composant de connexion (106) comprend en outre un composant de languette (200) et un composant de cadre (202).

6. Composant de bande RFID réactive (100) selon la revendication 1, dans lequel le composant conducteur (104) est positionné dans une boucle conductrice avec la puce RFID (102) en série.

7. Composant de bande RFID réactive (100) selon la revendication 6, dans lequel le composant de connexion (106) comprend en outre au moins l'un de : une déviation de surface (500, 502, 504) ; un point de fixation adhésif (602) ; ou une languette.

8. Composant de bande RFID réactive (100) selon la revendication 1, dans lequel le composant conducteur (104) se couple à l'objet métallique principalement par couplage de champ électrique.

9. Composant de bande RFID réactive (100) selon la revendication 1, dans lequel le composant de connexion (106) comprend un composant de languette (200) et un composant de cadre (202), et le composant de languette comprend une section de bord (204) qui est alignée à une section de bord extérieur (206) du composant de cadre.

10. Composant de bande RFID réactive (100) selon l'une quelconque des revendications 6 à 7, dans lequel le composant de connexion (106) comprend un composant de languette (200) encerclé par un composant de cadre (202).

11. Procédé de fabrication d'un composant de bande RFID réactive comprenant :
la formation d'une antenne sur une surface d'un composant de connexion (400) ;
la fixation d'une puce RFID à l'antenne (402) ;
le découpage à l'emporte-pièce du composant de connexion (404) ;
la préparation du composant de connexion pour une utilisation avec un objet métallique (406) en plaçant le composant de connexion dans un rouleau, une cartouche ou un sac ;
**caractérisé en ce qu'**il comprend en outre l'étape de
fixation du composant de connexion à l'objet métallique pour permettre l'incitation d'une réponse d'antenne de champ lointain, dans lequel la bande RFID se couple à l'objet métallique via un champ électrique ou un champ magnétique ou à la fois un champ électrique et un champ magnétique.

12. Procédé de fabrication du composant de bande RFID réactive selon la revendication 11, dans lequel les composants de connexion sont préparés dans des rouleaux et utilisés dans une imprimante et distribués dans un produit.

13. Procédé de fabrication du composant de bande RFID réactive selon la revendication 11 ou 12, dans lequel le composant de connexion est constitué d'un composant de cadre et d'un composant de languette.
